# EUROPEAN PATENT APPLICATION

(11) **EP 2 450 675 A2**
(43) Date of publication of application: **09.05.2012**
(21) Application number: 11184957.6
(22) Date of filing: 13.10.2011
(51) Int. Cl.: G01F 1/66, G01F 15/00, G01F 15/06, G01F 15/16

(54) **An integrated ultrasonic flowmeter and hydraulic valve**

(30) Priority: 19.10.2010 IL 20881510
(71) Applicant: Raphael Valves Industry (1975) Ltd., 30600 Or-Aqiva (IL)
(72) Inventor: Shalev, Hadar, 30889 Caesarea (IL)
(74) Representative: Jansen, Cornelis Marinus

(57) **Abstract**

The invention relates to the metering of water, being especially useful for agricultural purposes and other applications. An integrated water meter and cut-off valve with electronic controls is provided. The integrated water meter comprises a hollow body having an inlet port and an outlet port for a fluid and a passage connecting the ports; a generator of ultrasonic pulses in operational communication with the body, operationally connected to a US (ultra-sonic) transmitter transducer and a US receiver transducer, and a diaphragm valve inside the passage in fluid communication with the passage.

## Description

### FIELD OF THE INVENTION

The present invention relates to the metering of water, being especially useful for agricultural purposes and other application such as: industrial batching, municipal pressure control, pre-paid systems etc.

More particularly, the invention provides a battery or electrically operated ultrasonic water meter integrated with a hydraulic valve, wherein the latter can be preset to automatically close an irrigation system after a predetermined quantity of water has passed through the flowmeter.

### BACKGROUND OF THE INVENTION

A major problem today in agriculture is to profitably grow crops without incurring water costs which are too high to allow the farmer to make a profit when selling his produce. Local farmers have complained that some crops can be bought abroad at a cost which equals the cost of the water needed to grow such crops in Israel. Farmers nevertheless growing tomatoes and cotton for export have been accused by the press of "Exporting water", which is hardly a rational occupation in arid countries such as Israel.

The shortage of water in many countries finds expression in high water costs, and due to other various factors. Irrespective of the crops chosen for cultivation and even if the water used can be economically justified, farmers in countries such as Israel face water rationing (Often referred to as "Allocations") Eventually the price of water will stabilize at the cost of desalination, and "allocations" will no longer be needed as in practice there is no limit to the quantity of seawater available, and low cost land required by some desalination processes is available in the Negev (Southern dessert areas). However today water is still rationed and it is up to the farmer to plan use of his allocation in the most effective manner possible.

As a major user of available water the farmer will be forced to reduce the quantity of water used per unit of produce, but having better control over the quantity used for growing each crop will be of considerable service at the decision making stage.. In practice this means that the farmer will know how much irrigation is required for a specified crop and specified weather conditions and will irrigate crops accordingly, preferably using drip irrigation. Irrigation water consumption can be monitored by a flowmeter which accumulates readings similar to the well-know domestic water meter. Thus after noting a starting reading, the farmer can monitor the water meter. After the meter reading indicates that the crops being irrigated have received their intended volume of water the farmer can turn off the water by hand. It is well known that excess water could be fatal to the crops.

Presently, there are several types of water meters on the market which can be used in agricultural applications:
1. The common woltman type for DN40 and larger diameters, operated by an impeller placed in the water flow. Commercially available integrated with a valve from Bermad ltd and ARAD DALIA Israel
   This water meter type can be either dry type (the register transmission is operated by a magnetic coupling and transmit pulses per quantity to an irrigation controller) used in a hydrometer, or mechanical drive with a volume control dial used in a metering valve.
   Other common mechanical water meters used for irrigation purpose are proportional or tangential impeller water meters.
2. Ultrasonic water meters wherein one or more trancducers are placed in the flow, see for example US Patent Application 2009/0249889
3. Ultrasonic meters using two transducers disposed at an angle across the flow, see US Patent Applications 2007/0141786 by von Klooster et al., and 2008/0167792 to Ohmuro et al. This type is a commercially available meter offered by Yokogawa Electric Corporation.

The following review of US patents and US patent applications provides a fair picture of the state of the art.

Kishiro et al discloses an ultrasonic flowmeter in US Patent 7,437,948.which may be operated either in the pulse Doppler method or in the transit time method. Cut-off means are not included.

In US 7,584,065 Yamada et al. propose a further Doppler ultrasonic flowmeter, and specify the signal processing electronics associated with the meter. No automatic cut-off is included.

A further Doppler type ultrasonic flowmeter is seen in US Patent 7,712,382 to Takeda et al. The electronic signal processing units are connected to a computer for further processing.

The Yokogawa Electric Corporation offers both a portable type ultrasonic flowmeter, model US300pm and a fixed type, US300FM. There is no mention of a cut-off device.

### SUMMARY OF THE INVENTION

It is therefore one of the objects of the present invention to obviate the limitations of prior art metering devices and to provide a hydrometer which accurately measures the quantity of water being used.

It is a further object of the present invention to provide cut-off means which automatically stop the water flow when a desired quantity of water has passed through the hydrometer.

The present invention achieves the above objects by providing an integrated flowmeter and cut-off valve provided with electronic controls (henceforth hydrometer) comprising
a) a hollow body providing an inlet port and an outlet port for a fluid to be metered;
b) a generator of ultrasonic pulses associated with by said body, operationally connected to a US (ultra-sonic) transmitter transducer and a US receiver transducer, said transducers being positioned to operate at a sloping angle across a passage of moving fluid inside said hollow body, said passage being full of a fluid when said hydrometer is in use, said transducers being operationally connected to an electronic time measuring, calculating, control and display unit; and
c. a diaphragm valve inside said body and in fluid communication with said passage, said valve being normally closed and being opened by a solenoid in response to a signal generated by said electronic unit or by an irrigation controller connected to it; in response to the result of a fluid quantity calculation carried out by said electronic unit.

In a preferred embodiment of the present invention there is provided a hydrometer wherein said electronic calculating, control and display unit is provided with an adjustable control for setting the quantity of fluid measured by the flowmeter as having transversed therethrough, and on reaching said quantity generating a signal for operation of said solenoid to cut-off further flow.

In a further preferred embodiment of the present invention there is provided a hydrometer further provided with time adjustment means to reopen said valve after the passage of a selectable time period or certain dates.

In another preferred embodiment of the present invention there is provided a hydrometer connected by electric wiring to an external irrigation controller, providing pulses per quantity input to the controller. The irrigation controller supplies power to the solenoid according to a preset time table in order to open the valve. Once the preset quantity is reached, the controller supplies a pulse to the solenoid in case of latch solenoid or shuts down the power supply to the solenoid in case of continues current normally closed solenoid valve. This operation controls the solenoid which is connected hydraulically to the valve, and the valve is closed.

In another preferred embodiment of the present invention there is provided a hydrometer further provided with a 2-way RF control and reader unit, providing data to a remote location and enabling the operation of said solenoid from said remote location.

In a further preferred embodiment of the present invention there is provided a hydrometer wherein said electronic calculating, control and display unit is further provided with means for activating the broadcasting of warnings related to a leak, blockage, bursting danger or pipeline breakage.

In all embodiments of the present invention the hydrometer is configured to allow the passage of water containing fertilizer, sand, small stones and small foreign objects.

It will thus be realized that metering of water on the basis of elapsed time does not provide best results because water pressure can vary considerably. One hour's irrigation at high pressure will require substantially more water than one hour at low pressure. The US meter measures the speed of flow, which gives an accurate result as to the quantity of water having passed through the meter.

Volume = Q*t = v*A*t Q-flow rate, t-time, v-linear speed, A- Cross section area.

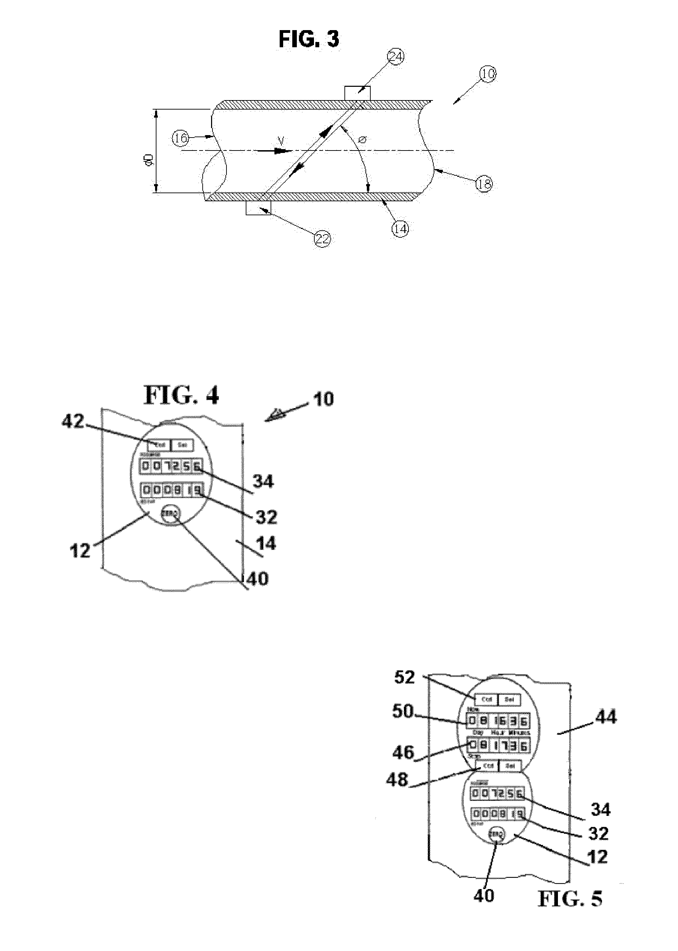

However there are situations where irrigation must be stopped at a certain time irrespective of the quantity of fluid which has passed through the hydrometer. An example of such a situation is where local by-laws prohibit daytime irrigation because substantial quantities of water are lost through evaporation. An embodiment to meet this need will be seen in FIG. 4.

### BRIEF DESCRIPTION OF THE DRAWINGS

The invention will now be described further with reference to the accompanying drawings, which represent by example preferred embodiments of the invention. Structural details are shown only as far as necessary for a fundamental understanding thereof. The described examples, together with the drawings, will make apparent to those skilled in the art how further forms of the invention may be realized.

In the drawings:
FIG. 1 is an elevational sectional view of a preferred embodiment of the hydrometer according to the invention, seen in its open position;
Fig. 2 is the same, but in its closed position;
FIG. 3 is diagrammatic representation showing the factors used to calculate flow rate;
FIG. 4 is detail view of the readings provided by the electronic unit;
FIG. 5 is the same, showing additional readings for time control;
FIG. 6 is a hydraulic diagram showing how the hydrometer is closed and opened;
FIG. 7 is a diagrammatic view of a hydrometer being controlled from a remote computer terminal; and
FIG. 8 is a further diagram illustrating the use of two external control valves.

### DETAILED DESCRIPTION OF THE INVENTION

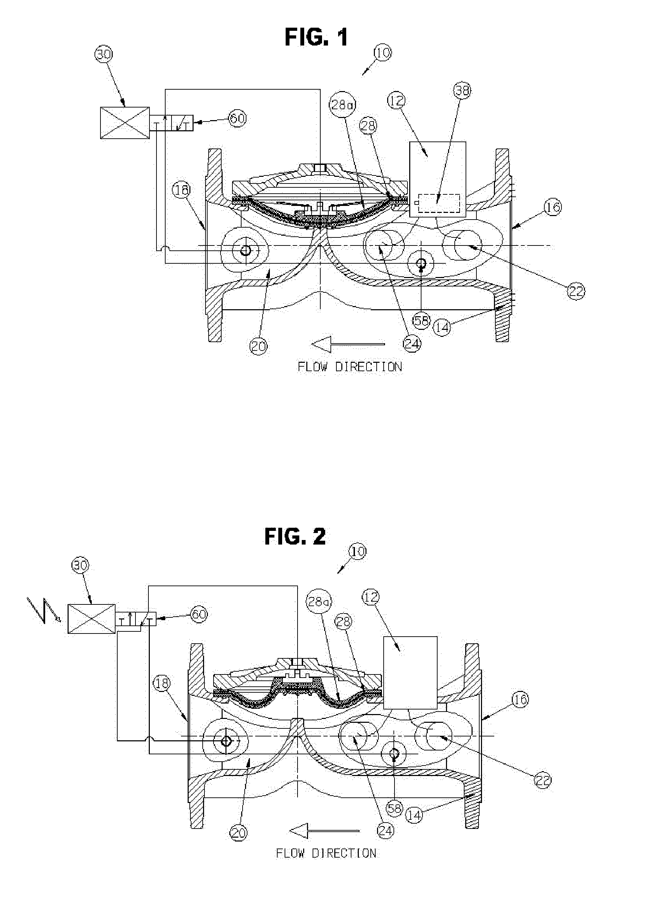

There is seen in FIG. 1 an integrated flowmeter and cut-off valve (henceforth hydrometer 10) provided with electronic controls, comprising

A hollow body 14 has an inlet port 16 and an outlet port 18 for a fluid, a passage 20 connecting the ports.

A generator 21 of ultrasonic pulses is in operational communication with the body 14. The US pulses are transmitted to a pair of US (ultra-sonic) transmitter receiver transducers 22, 24. The transducers are positioned to operate at a sloping angle across a passage of fluid 20 inside the hollow body 14, the passage 20 being full of a fluid when the hydrometer is in use.

The transducers 22, 24 are operationally connected to an electronic calculating, control and display unit 12 which compares the speed of transmission in a first direction to the speed of transmission in the opposite direction. This difference is used by the electronic unit to calculate the speed of fluid flow and on the assumption that the fluid passage 20 remains full, the quantity of fluid passed is calculated and recorded as will be explained with reference to FIG.3.

As in many of the locations where the hydrometer 10 is likely to be used mains power will be unavailable, power for all systems is provided by a chemical battery 38, typically a 3.6 VDC D size battery, or similar.

A diaphragm valve 28 is seen inside the passage 20, the diaphragm 28 is shown opened to allow fluid flow through the pipeline.

In agricultural applications the fluid being metered is likely to be water containing fertilizer, sand, small stones and small foreign objects. The hydrometer can operate without difficulty with such impure water as there are no moving parts or small orifices in the water path 20. A filter 31 is provided only for the small quantity of water for operating the hydraulic control circuit seen in FIG.2.

With reference to the rest of the figures, similar reference numerals have been used to identify similar parts.

The diaphragm valve in its closed state is illustrated in FIG. 2.

The diaphragm 28 is seen closed as a result of part of the fluid having been directed by means of a first external valve 60 to apply pressure to the outer face 28a of the diaphragm 28. Conversely the diaphragm valve can be reopened by the external valve 60, which can reduce pressure on the outer face 28a of said diaphragm 28 by directing the water contacting said outer surface 28a to drainage. Normal fluid flow is then resumed in the pipeline through said hydrometer 10.

As will be seen more clearly in FIG.4, the electronic unit 12 compares the quantity of water 32 which has passed through the hydrometer 10 with the target quantity 34 which has been set by the user. When the difference between these quantities is zero the electronic unit 12 produces a pulse 1 sent to latching solenoid or stop the voltage in case of normally closed solenoid 30. The solenoid 30 operates the solenoid valve 60 to allow fluid flow above the diaphragm area. Fluid pressure then applies force on the upper diaphragm surface 28a that pushes the diaphragm 28 down towards the separating wall, closes the valve and prevents further water flow at the cross-section 20, until an electrical control changes the solenoid position.

The water used to operate the control circuit passes through a self cleaning filter 58.

In FIG. 3 there is seen a diagrammatic representation of the US measurement system. A pair of US transducers 22, 24 is attached to the body 14 of the meter. A first transducer 22 generates US pulses and a second US transducer 24 receives the pulses after a short time interval. Pulse transmission is then reversed. The transducer 22 is positioned to send sound wave in the downstream direction and the transducer 24 is positioned to send soundwave in the upstream direction. The traveling time of the sound is shorter while travelling in the same direction of the fluid flow inside the hollow body 14. The water path 20 is full of the fluid when the hydrometer is in use. The transducers 22, 24 are operationally connected to an electronic time measuring, calculating, control and display unit 12.

The fluid linear velocity (V) is calculated by the electronic unit 12 according to the following formula:
C = sonic speed (which is subject to temperature and air bubbles in the flow)
D = inside diameter of the pipe
Δt=differential propagation time
Ø=angle of US transducers in flow direction
v= c²Δt tan Ø/2D This relationship is simplified if 0= 45 ⁰ V= c² Δt /2D
The Flowrate Q is then calculated according the following formula: Q=V*A
A= Cross section Area.
The fluid volume is calculated by the following formula: V=Q*T

Referring now to FIG.4, there is seen a detail of the hydrometer 10 wherein the electronic calculating, control and display unit 12 is provided with a control 40 for resetting the quantity of fluid 32 measured by the hydrometer 10 to zero. The target quantity 34 is set by using the control 42. On reaching this quantity the electronic unit 12 generates a signal for operation of the solenoid 30 seen in FIG. 2 to cut-off further flow. This configuration contains both totalizer and quantity control in the same metering valve integrated with the Ultrasonic metering control unit to enable a standalone automatic volume control irrigation valve.

FIG. 5 illustrates a detail of a hydrometer 44 which is arranged for time measurement as well as US flow measurement. This embodiment meets the needs of a user who needs to set a time cut off irrespective of the quantity of water which has passed through the valve during the passage of a selectable time period. Such an arrangement is useful where municipal laws forbid daytime irrigation, allowing irrigation only at night time when less water is lost to evaporation. Target time 46 in days, hours and minutes is set by the control 48. Actual elapsed time is recorded at 50 and can be reset using control 52. This embodiment is also provided with the flow measuring components seen in FIG. 4

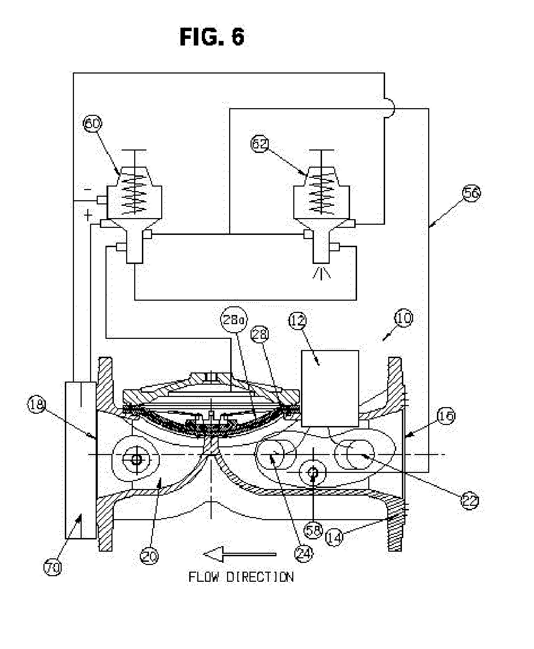

Besides its batching function, the Hydrometer can also regulate the pressure or the flow rate or both. The embodiment represented by the diagram FIG. 6 shows a hydrometer being controlled by an external hydraulic circuit 56 using energy provided by the pressure of the fluid being monitored. Fluid is bled off through a filter 58 and sent to a flow control pilot valve 60 connected to an orifice plate 70 and to a 3-way pressure-reducing pilot valve 62. These pilot valves control both the pressure and the flow rate, inside a pressure control pilot there is provided a spring that can be compressed to a certain force. When the pressure is low the spring causes the pilot valve to drain water from above the valve diaphragm. When the pressure increase it applies a force that is higher than the spring force, changes the pilot valve status in order to supply pressure above the diaphragm to close the main valve. The diaphragm (28) is in an intermediate state, closing or opening a little all the time according the preset spring force and the line-pressure. A flow control pilot is operated similar according a force developed by a pressure difference between upstream and downstream of an orifice.

Both pilots can be adjusted on a test bench for certain pressure or flowrate according the required conditions.

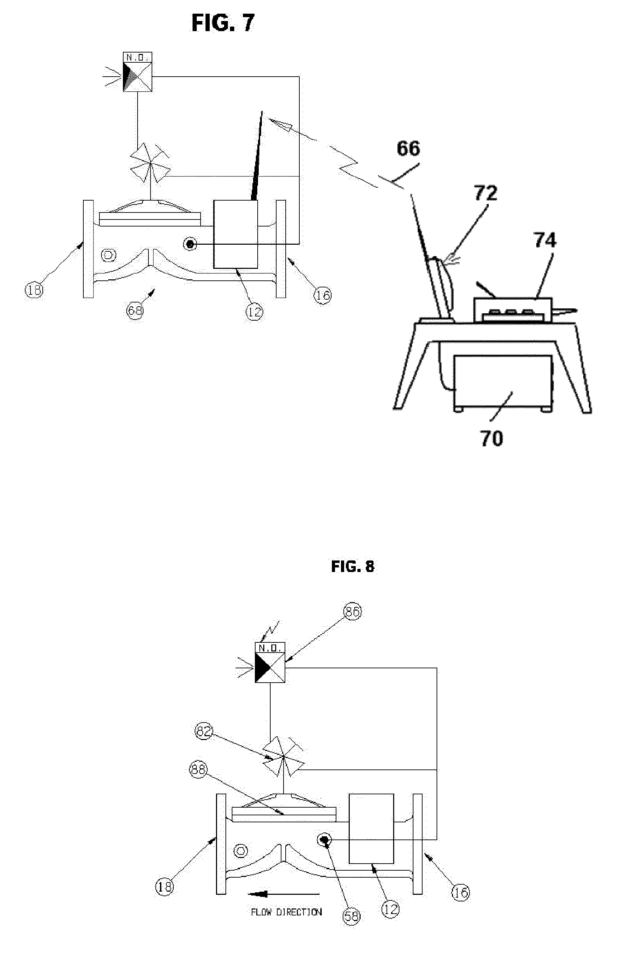

Seen in FIG.7 is an embodiment of the hydrometer 64 which is further provided with a 2-way RF control 66 and reader unit. Data is transmitted from the hydrometer 64 to a remote computer terminal 70. From the terminal 70 a remote operator can send a RF signal to operate or release the cut-off solenoid 30.

In the present embodiment a pre set high flow rate value at the control and display unit 12 indicate a burst in the line. Once the high flow rate value is recognized it generates a warning alarm 72. Constant Low flow rate indicates a problem with the water supply, or indicates a leak somewhere in the pipeline. An operator of the terminal 70 receiving such alarm is prompted to launch a timely investigation to diagnose the problem which has triggered the actuation of the alarm 72. A log of the operation of the hydrometer can be captured and recorded by the data logger or printer 74.

FIG. 8 is a further embodiment 80 of the hydrometer, arranged for remote control. The three-way solenoid valve 86-is normally opened. When powered, the solenoid 86 opens the valve80.

The diaphragm valve 88 is normally closed. The valve 88 is opened when the cock valve 84 allows fluid drainage from the diaphragm valve 88.

The present embodiment includes a hand-operated three way cock 82 allowing a user to override the automatic system, as may be needed during a power failure, cleaning or maintenance work.

The scope of the described invention is intended to include all embodiments coming within the meaning of the following claims. The foregoing examples illustrate useful forms of the invention, but are not to be considered as limiting its scope, as those skilled in the art will be aware that additional variants and modifications of the invention can readily be formulated without departing from the meaning of the following claims.

## Claims

1. An integrated water meter and cut-off valve (henceforth hydrometer) provided with electronic controls, comprising
a) a hollow body having an inlet port and an outlet port for a fluid and a passage connecting said ports;
b) a generator of ultrasonic pulses in operational communication with said body, operationally connected to a US (ultra-sonic) transmitter transducer and a US receiver transducer, said transducers being positioned to operate at a sloping angle across a passage of fluid inside said hollow body, said passage being full of a fluid when said hydrometer is in use, and said transducers being operationally connected to an electronic calculating, control and display unit; and
c) a diaphragm valve inside said passage in fluid communication with said passage, said valve being normally closed to prevent fluid flow when a part of said fluid is directed by means of a first external valve to apply pressure to the outer face of said diaphragm, and being opened wherein the reverse movement of said external valve reduces pressure on said outer face of said diaphragm and again permits normal fluid flow in the pipeline through said hydrometer.

2. The hydrometer as claimed in claim 1, wherein said electronic calculating, control and display unit is provided with an adjustable control for setting the quantity of fluid measured by the flowmeter as having transversed therethrough, and on reaching said quantity generating a signal to cause closure of the diaphragm.

3. The hydrometer as claimed in claim 2, wherein said signal is used to trigger operation of said external valve, said external valve being a solenoid operated hydraulic valve and in a first position directing water under pressure to the outer face of said diaphragm, and in a second position allowing drainage of water cumulating on said outer face of said diaphragm.

4. The hydrometer as claimed in claim 3, wherein said external valve is operated by a bi-directional self-holding (latching) solenoid or continues current.

5. The hydrometer as claimed in claim 1, wherein power for all systems is provided by a battery.

6. The hydrometer as claimed in claim 1, wherein power for all systems is provided by a transformer-rectifier connectable to an electric power socket.

7. The hydrometer as claimed in claim 4, wherein a capacitor is provided connected for being charged by said battery, said capacitor being arranged for discharge through said solenoid of said external valve in response to said signal from said electronic calculating, control and display unit.

8. The hydrometer as claimed in claim 1 further provided with time adjustment means to reopen said diaphragm valve after the passage of a selectable time period.

9. The hydrometer as claimed in claim 1, further provided with a RF control and remote reader unit and controller.

10. The hydrometer as claimed in claim 1 wherein said electronic calculating, control and display unit is further provided with means for activating the broadcasting of warnings related to a leak, pipe bursting danger or pipeline breakage.

11. The hydrometer as claimed in claim 1, being configured to allow the passage of water containing fertilizer, sand, small stones and small foreign objects, a filter being provided to eliminate particulate matter in the control circuit of said external valve.

12. The hydrometer as claimed in claim 1, being further provided with a manually operated second external valve, enabling a human operator to manual override the automatic systems.

13. An ultrasonic integrated flowmeter and cut-off valve provided with electronic controls, substantially as described hereinbefore and with reference to the accompanying drawings.
